# FASCICULE DE BREVET EUROPEEN

(11) **EP 1 983 747 B1**
(45) Date de publication et mention de la délivrance du brevet: **14.08.2013**
(21) Numéro de dépôt: 08103602.2
(22) Date de dépôt: 17.04.2008
(51) Int. Cl.: H04N 5/775, H04N 5/76, H04N 5/782, H04N 5/907, H04N 5/85

(54) **Magnétoscope numérique et procédé pour transmettre un signal numérique à un téléviseur ayant une entrée compatible avec la télévision numérique**
Digitales Aufnahmegerät und Verfahren zur Übertragung eines digitalen Signals an ein Fernsehgerät, das einen kompatiblen Anschluss für Digitalfernsehgeräte aufweist.
Digital video recorder and method for transmitting a digital signal to a television set having an input compatible with the digital television set.

(30) Priorité: 17.04.2007 FR 0702767
(43) Date de publication de la demande: 22.10.2008
(73) Titulaire: Neotion SA, 13600 La Ciotat (FR)
(72) Inventeur: Niot, François, 06410 BIOT (FR)
(74) Mandataire: Roman, Alexis

(56) Documents cités:
- EP-A1- 0 379 766
- EP-A2- 1 100 266
- US-A- 5 500 739
- US-A1- 2001 028 782

## Description

### Domaine technique de l'invention.

La présente invention a pour objet une nouvelle architecture de magnétoscope numérique. L'invention concerne également un procédé permettant de transmettre un signal numérique à un téléviseur ayant une entrée compatible avec la télévision numérique (Télévision Numérique Terrestre, Satellite ou Câble).

L'invention se situe dans le contexte de la télévision numérique. Elle propose principalement une nouvelle architecture pour les magnétoscopes numériques également appelés PVR (abréviation en anglais de Personal Video Recorder) ou DVR (abréviation en anglais de Digital Video Recorder).

### État de la technique.

La diffusion de la télévision, qui était à l'origine analogique (standards de diffusion analogique PAL, SECAM ou NTSC), est en train de migrer vers une architecture toute numérique.

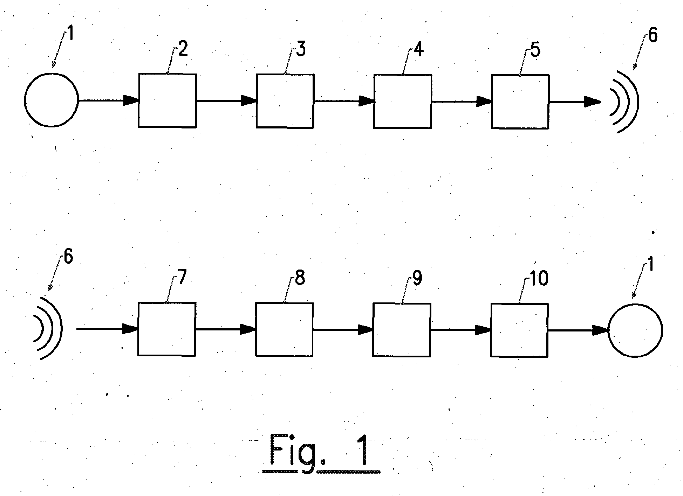

En se rapportant à la figure 1, l'architecture typique de ces systèmes de diffusion numérique est la suivante :

### Emission :

- Les données numériques vidéo et/ou audio 1 sont préalablement encodées (ou compressées), par l'intermédiaire d'un encodeur 2, avec un standard de compression optimisé pour la vidéo et l'audio pour qu'elles tiennent moins de place. Les standards de compression habituellement utilisés sont le MPEG-2 et le MPEG-4.
- Par l'intermédiaire d'un modulateur 3, le résultat est ensuite modulé en IF (Fréquence Intermédiaire) suivant un standard adapté au moyen de distribution utilisé : câble, satellite, terrestre. En pratique on utilise une modulation QPSK pour le DVB-S, une modulation QAM pour le DVB-C et une modulation COFDM pour le DVB-T.
- Le résultat est ensuite remodulé en RF (Fréquence Radio) par l'intermédiaire d'un modulateur 4 sur une fréquence donnée (ou canal),
- Le signal RF 6 est ensuite transmis soit par ondes radio (terrestre et satellite) soit par câble. Pour ce faire, on utilise un émetteur 5 adapté. En pratique un flux de signaux RF est transmis, chaque signal RF étant transmis à une fréquence donnée.

### Réception :

- Le flux de signaux RF 6 est capté par l'intermédiaire d'un récepteur 7 adapté : une antenne dans le cas d'une diffusion terrestre, une parabole par satellite, ou directement par branchement sur câble dans le cas d'une diffusion par câble.
- Un tuner 8 permet de sélectionner dans le flux de signaux RF reçus, un signal RF transmis à une fréquence donnée (syntonisation du canal souhaité). À la sortie du tuner 8, le signal RF sélectionné est démodulé en signal IF.
- Le signal IF est ensuite démodulé par l'intermédiaire d'un démodulateur 9 de manière à récupérer les données numériques vidéo et/ou audio initialement encodées.
- Ces données numériques sont ensuite décodées par l'intermédiaire d'un décodeur 10 pour récupérer les données numériques vidéo et/ou audio 1 initiales, c'est-à-dire non compressées. Ces données décompressées peuvent alors être visualisées sur l'écran du téléviseur.

### Magnétoscopes numériques :

Il existe aujourd'hui deux architectures pour les magnétoscopes numériques : les magnétoscopes numériques avec encodeur vidéo et les magnétoscopes numériques sans encodeur vidéo.

Les magnétoscopes numériques avec encodeur vidéo (par exemple du type graveur DVD) reçoivent les données vidéo et/ou audio sous forme analogique :
- soit directement le signal vidéo, par exemple les composants RBG c'est-à-dire les composants Rouge-Bleu-Vert d'un signal vidéo, (ou composantes YUV),
- soit le signal RF transportant le signal vidéo encodé selon un standard de diffusion analogique PAL, SECAM ou NTSC. Dans ce cas, la vidéo est d'abord extraite du signal RF puis décodée en RGB (ou YUV).

Ces magnétoscopes numérisent la vidéo puis la compressent avec un encodeur vidéo (par exemple du type MPEG-2). La vidéo compressée est ensuite stockée sur un dispositif de stockage (par exemple sur un DVD, sur un disque dur ou sur une mémoire) pour être jouée plus tard.

Lors de la visualisation, la vidéo compressée est relue à partir du dispositif de stockage. Elle est ensuite décompressée puis le résultat est renvoyé au téléviseur. II existe actuellement trois solutions pour renvoyer la vidéo décompressée au téléviseur :
- sortie analogique, par exemple prises Péritel ou Scart. II s'agit de la solution la plus courante.
- sortie en RF comme pour les magnétoscopes analogiques : un signal analogique est encodé selon un standard de diffusion analogique PAL, SECAM ou NTSC, puis remodulé en RF.
- sortie numérique selon la norme HDMI (transmission de données numériques non compressées entre deux appareils proches). Cette solution se retrouve sur les appareils les plus récents.

Les magnétoscopes numériques sans encodeur vidéo reçoivent un signal RF dans lequel la vidéo est codée sous forme numérique donc déjà compressée. Ces magnétoscopes n'ont donc pas besoin de numériser l'image ni de la compresser pour qu'elle tienne moins de place. Ils extraient la vidéo compressée du signal RF et la stockent directement sur le dispositif de stockage.

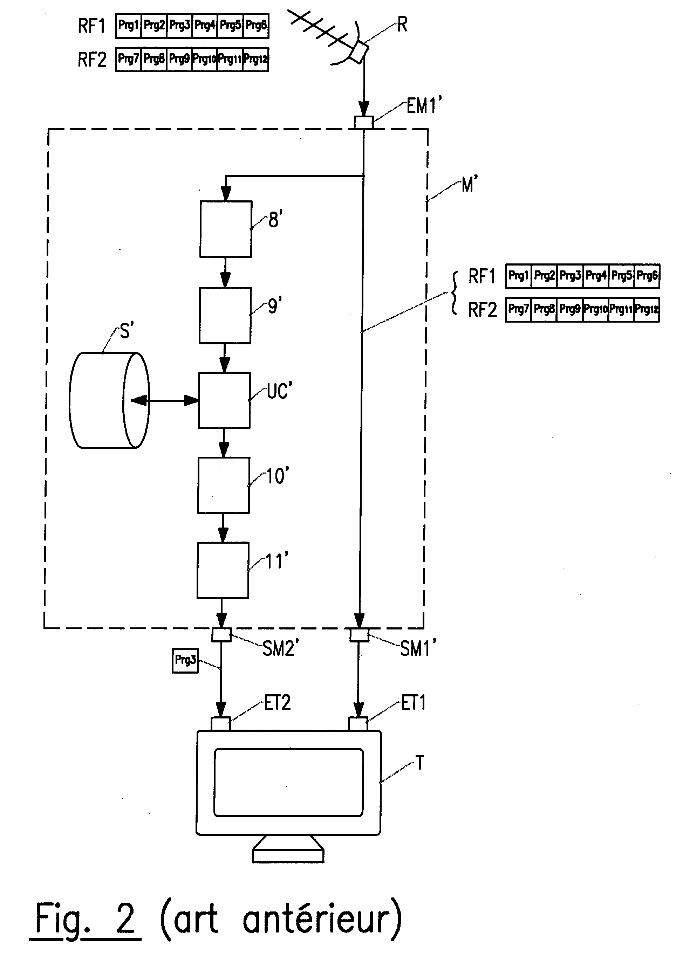

Le fonctionnement d'un magnétoscope numérique sans encodeur vidéo va maintenant être décrit plus en détail en se rapportant à la figure 2.

Habituellement un tel magnétoscope M' comporte une entrée EM1' reliée à un récepteur R (antenne, parabole ou câble) par l'intermédiaire d'un câble coaxial ou similaire type prise UHF. L'entrée EM1' est destinée à recevoir les signaux RF captés par le récepteur R.

Le magnétoscope M' comporte une première sortie SM1' reliée à l'entrée ET1 d'un téléviseur T compatible avec la télévision numérique. La sortie SM1' est reliée à l'entrée ET1 par l'intermédiaire d'un câble coaxial ou similaire. Cette sortie est destinée à transmettre directement au téléviseur T les signaux RF reçus.

Le magnétoscope M' comporte une seconde sortie SM2', du type Péritel ou HDMI, destinée à être reliée à une entrée ET2 du téléviseur T permettant de recevoir des données analogiques ou numériques. Dans le premier cas, l'entrée ET2 est une prise type Péritel et dans le second cas une prise type HDMI.

Prenons le cas de la télévision numérique (terrestre, satellite, câble) où le récepteur R capte deux signaux RF, respectivement RF1 et RF2, transmis à des fréquences différentes. Les signaux RF1 et RF2 comportent par exemple chacun six programmes de télévision, respectivement Prg1-Prg6 et Prg7-Prg12.

Les signaux RF1 et RF2 sont directement transmis au téléviseur T via la sortie SM1' et l'entrée ET1. En pratique, le téléviseur T intègre un dispositif du type décrit sur la figure 1 et permettant de récupérer des données numériques vidéo et/ou audio non compressées, lesdites données pouvant alors être visualisées sur l'écran.

Un utilisateur souhaite maintenant enregistrer le programme Prg 3. Pour ce faire, le magnétoscope M' comporte un tuner 8' permettant de sélectionner le signal RF1 comportant le programme Prg3. À la sortie du tuner 8', le signal RF1 sélectionné est démodulé en signal IF. Ce dernier est ensuite démodulé par l'intermédiaire d'un démodulateur 9' de manière à récupérer l'ensemble des données numériques vidéo et/ou audio encodées relatives aux programmes Prg1 à Prg6. Une unité centrale UC' identifie le programme Prg3 parmi les autres programmes et stocke les données numériques associées dans un dispositif de stockage S'.

Lorsque l'utilisateur souhaite visualiser le programme Prg3, l'unité centrale UC' lit, à partir du dispositif de stockage S', les données numériques stockées relatives au dit programme. Ces données numériques sont ensuite décodées par l'intermédiaire d'un décodeur 10' pour récupérer les données numériques vidéo et/ou audio non compressées du programme Prg3. Ces données numériques décompressées peuvent alors être visualisées sur l'écran du téléviseur T via la sortie SM2' et l'entrée ET2, ces dernières étant du type HDMI. Dans le cas où la sortie SM2' et l'entrée ET2 sont du type Péritel, le magnétoscope M' peut intégrer un convertisseur 11' permettant de convertir les données numériques en données analogiques. Ce type de mangnétoscope est par exemple décrit dans le document EP 1.100.266 (HUGUES ELECTRONICS CORP) qui divulgue en outre toutes les caractéristiques du préambule de la revendication principale.

Les magnétoscopes numériques décrits précédemment présentent un certain nombre d'inconvénients. Tout d'abord, les données sont décodées (décompressées) dans le magnétoscope avant d'être transmises à la télévision. Lorsque cette transmission est analogique, des pertes de qualités peuvent intervenir. De plus, ils doivent intégrer des décodeurs 10' qui sont des composants relativement chers ayant un impact direct sur le prix de vente. Également, ces magnétoscopes sont dépendants du format d'encodage, le fonctionnement et les éléments constitutifs étant différents selon que les données sont encodées en MPEG-2, MPEG-4 ou autre, et que le format soit SD (Définition Standard) ou HD (Haute Définition). En outre, ces magnétoscopes doivent être reliés à la télévision par au moins deux connexions différentes : une pour transférer les données numériques ou analogiques décompressées et une pour transférer directement les signaux RF captés par le récepteur.

Face à cet état des choses, le principal objectif de l'invention est de simplifier le fonctionnement et la conception des magnétoscopes numériques recevant des données sous forme numérique.

Un autre objectif de l'invention est de proposer un procédé permettant de transmettre simplement un signal RF et en numérique à un téléviseur ayant une entrée compatible avec la télévision numérique.

### Divulgation de l'invention.

Le principe de l'invention consiste à renvoyer au téléviseur les données numériques remodulées en RF.

La solution proposée par l'invention est un magnétoscope numérique comportant :
- un moyen pour recevoir un signal RF d'origine,
- un moyen pour extraire de ce signal RF d'origine, des données numériques compressées représentant des images fixes et/ou de la vidéo et/ou de l'audio,
- un moyen pour stocker les données numériques compressées sur un dispositif de stockage,
- un moyen pour lire, à partir du dispositif de stockage, les données numériques stockées,
- un moyen pour moduler, suivant un standard de modulation numérique, les données numériques lues,
- un moyen pour remoduler le signal généré en un signal RF,
- un moyen pour mixer le signal RF généré avec le signal RF d'origine.

Par exemple pour un téléviseur ayant une entrée compatible avec la TNT (par exemple norme DVB-T en France), le principe de l'invention consiste à ré-encoder la vidéo et/ou l'audio compressées suivant la norme DVB-T puis à la remoduler en RF et enfin à réinjecter ce signal dans le signal d'origine. Ainsi, le téléviseur aura accès à la fois aux chaînes d'origine (canaux d'origine) mais également à une nouvelle chaîne qui sera dédiée aux programmes du magnétoscope numérique (nouveau canal). Le principe reste similaire pour des téléviseurs ayant une entrée native satellite ou câble.

Les avantages de cette architecture sont les suivants :
- la vidéo reste codée en numérique de bout en bout ce qui évite toute perte de qualité,
- pas d'encodeur ni de décodeur vidéo de type MPEG-2 ou autre. En effet, la vidéo est reçue sous forme compressée, est stockée sous forme compressée et est renvoyée toujours sous forme compressée. À aucun moment la vidéo n'est décompressée. On peut ainsi espérer fabriquer des décodeurs à moindre coût,
- indépendance vis-à-vis du format d'encodage : ce magnétoscope est du type universel, car il fonctionne que la vidéo soit encodée en MPEG-2, MPEG-4 ou autre, que le format soit SD ou HD,
- réduction du nombre de câbles allant du magnétoscope au téléviseur.

Selon une caractéristique avantageuse de l'invention, ce magnétoscope numérique comporte un moyen pour créer un nouveau programme en mélangeant les données numériques lues depuis le dispositif de stockage, avec des données crées dynamiquement et/ou avec les données reçues en direct.

Selon une autre caractéristique avantageuse de l'invention, le signal RF généré par le moyen de remodulation est codé dans un standard différent du signal RF d'origine.

Selon encore une autre caractéristique avantageuse de l'invention, le dispositif de stockage est amovible. Dans une variante de réalisation, le stockage est déporté sur un dispositif de stockage accessible par réseau filaire ou sans fil.

Selon encore une autre caractéristique avantageuse de l'invention, des données numériques, autres que celles contenues dans le signal RF d'origine, sont stockées sur le dispositif de stockage par un autre appareil.

Un autre aspect de l'invention concerne un procédé pour transmettre un signal numérique à un téléviseur ayant une entrée compatible avec la télévision numérique (terrestre, satellite, câble), ledit procédé comportant les étapes suivantes :
- réception d'un signal RF d'origine,
- extraction du signal RF d'origine, des données numériques compressées représentant des images fixes et/ou de la vidéo et/ou de l'audio,
- stockage des données numériques compressées sur un dispositif de stockage,
- lecture, à partir du dispositif de stockage, des données numériques stockées,
- modulation, suivant un standard de modulation numérique, des données numériques lues,
- remodulation du signal généré en un signal RF,
- mixage du signal RF généré avec le signal RF d'origine.

Selon une caractéristique avantageuse de l'invention, on crée un nouveau programme en mélangeant les données numériques relues depuis le dispositif de stockage avec des données créées dynamiquement et/ou avec les données reçues en direct.

Selon encore une autre caractéristique avantageuse de l'invention, on code le signal RF généré, dans un standard différent du signal RF d'origine.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 schématise l'architecture type d'un système de diffusion numérique,
- la figure 2 est un exemple de réalisation d'un magnétoscope numérique sans encodeur vidéo connu de l'art antérieur,
- la figure 3 est un exemple de réalisation du magnétoscope numérique objet de l'invention.

### Modes de réalisation préférée de l'invention.

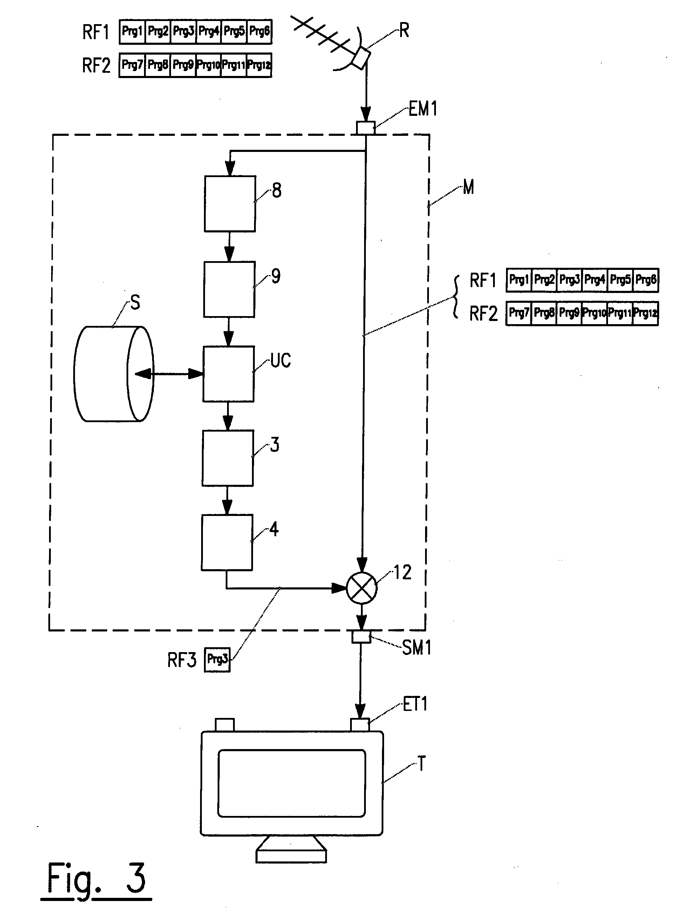

En se rapportant à la figure 3, le magnétoscope numérique M objet de l'invention comporte une entrée EM1 reliée à un récepteur R (antenne, parabole ou câble) par l'intermédiaire d'un câble coaxial ou similaire type prise UHF. L'entrée EM1 est destinée à recevoir les signaux RF captés par le récepteur R. Le magnétoscope M comporte une sortie SM1 reliée à l'entrée ET1 d'un téléviseur T compatible avec la télévision numérique. La sortie SM1 est reliée à l'entrée ET1 par l'intermédiaire d'un câble coaxial ou similaire. Cette sortie est destinée à transmettre directement au téléviseur T les signaux RF reçus au niveau de l'entrée EM1.

Reprenons le cas précédent où le récepteur R capte deux signaux RF, respectivement RF1 et RF2, comportant chacun six programmes de télévision, respectivement Prg1-Prg6 et Prg7-Prg12. Ces derniers correspondent à des données numériques vidéo et/ou audio et/ou des images fixes. On peut également prévoir que les programmes Prg1-Prg12 correspondent à des données numériques du type texte, e-mail, logiciel, etc. Le fonctionnement qui va être décrit serait similaire si le nombre de signaux RF captés par le récepteur R, ainsi que le nombre de programmes par signal RF, étaient inférieurs ou supérieurs.

Les signaux RF1 et RF2 reçus au niveau de l'entrée EM1 sont directement transmis au téléviseur T via la sortie SM1 et l'entrée ET1. En pratique, le téléviseur T intègre un dispositif du type décrit sur la figure 1 et permettant de récupérer les données numériques vidéo et/ou audio compressées, lesdites données pouvant être décompressées pour être visualisées sur l'écran.

Reprenons le cas où l'utilisateur souhaite enregistrer le programme Prg 3. Le processus d'enregistrement est similaire à celui décrit précédemment pour les magnétoscopes connus de l'art antérieur : un tuner 8 permet de sélectionner le signal RF1 comportant le programme Prg3. A la sortie du tuner 8, le signal RF1 sélectionné est démodulé en signal IF. Ce dernier est ensuite démodulé par l'intermédiaire d'un démodulateur 9 de manière à récupérer l'ensemble des données numériques vidéo et/ou audio encodées relatives aux programmes Prg1 à Prg6. Une unité centrale UC du type processeur met en oeuvre une application informatique permettant d'identifier le programme Prg3 parmi les autres programmes et stocker les données numériques associées dans un dispositif de stockage S. Les données numériques stockées sont en principe des images fixes et/ou de la vidéo et/ou de l'audio. En pratique, chaque programme Prg1-Prg12 contient des informations d'identification qui lui sont propres et l'application informatique mise en oeuvre par l'unité centrale UC est connue de l'homme du métier.

Le dispositif de stockage S peut être fixe, du type disque dur intégré, ou amovible du type disque dur USB, carte de stockage-mémoire, DVD, etc. On peut également prévoir que le stockage soit déporté sur un dispositif de stockage accessible par réseau filaire ou sans fil, par exemple par réseau Ethernet, Wi-Fi, etc.

Des données numériques, autres que celles contenues dans les signaux RF1 et RF2 d'origine, peuvent également être stockées sur le dispositif de stockage S par un autre appareil. Par exemple, on peut prévoir de stocker sur le dispositif de stockage S des images fixes et/ou de la vidéo et/ou de l'audio provenant du dispositif de stockage d'un magnétoscope numérique similaire, d'un disque dur externe, du disque dur d'un PC, etc.

Lorsque l'utilisateur souhaite visualiser le programme Prg3, l'unité centrale UC met en oeuvre une application informatique permettant de lire, à partir du dispositif de stockage S, les données numériques stockées relatives au dit programme. Cette application informatique est connue de l'homme du métier.

Conformément à l'invention et par l'intermédiaire d'un modulateur 3, ces données numériques lues sont modulées en IF suivant un standard de modulation numérique : modulation QPSK pour le DVB-S, modulation QAM pour le DVB-C, modulation COFDM pour le DVB-T. Le signal IF généré est ensuite remodulé en RF par l'intermédiaire d'un modulateur 4. Le nouveau signal RF3 généré est codé soit dans un standard identique aux signaux RF1 et RF2 d'origine, soit dans un standard différent desdits signaux RF1 et RF2 (par exemple réception satellite et ré-injection terrestre). Toutefois, dans ce dernier cas, il n'y a pas de mixage entre les différents signaux, le nouveau signal RF3 étant dirigé vers un autre téléviseur ou appareil ayant une entrée compatible avec le standard dudit signal.

Le nouveau signal RF3 généré est ensuite mixé avec les signaux RF1 et RF2 d'origine l'ensemble étant normalement transmis vers le téléviseur T. Pour effectuer le mixage des signaux RF1, RF2 et RF3, on utilise un mixeur 12 du type connu de l'homme du métier. Les signaux RF1, RF2 et RF3 sont directement transmis au téléviseur T via la sortie SM1 et l'entrée ET1, ledit téléviseur intégrant un dispositif permettant de récupérer les données numériques vidéo et/ou audio non compressées pour les visualiser sur l'écran.

Le nouveau signal RF3 généré est avantageusement mixé avec les signaux RF1 et RF2 d'origine sur un canal non utilisé. Pour ce faire, le signal RF3 est modulé sur une porteuse ayant une fréquence différente de celles des porteuses sur lesquelles sont modulés les signaux RF1 et RF2. On peut toutefois envisager de mixer le nouveau signal RF3 généré avec les signaux RF1 et RF2 d'origine sur un canal déjà utilisé.

Il peut être avantageux de créer un nouveau programme Prg3 en mélangeant les données numériques lues depuis le dispositif de stockage S, avec des données créées dynamiquement. Par exemple, lorsque l'utilisateur souhaite visualiser le programme Prg3, l'unité centrale UC met en oeuvre une application informatique permettant de mélanger les données numériques lues avec les données reçues en direct et/ou avec des données créées dynamiquement telles qu'un menu, un texte résumant le programme, des e-mails, des applications informatiques de mise à jour, etc. De la même manière que décrit précédemment, ce nouveau programme est modulé suivant un standard de modulation numérique, puis remodulé en un signal RF et enfin mixé avec le signal RF d'origine.

On peut également prévoir que l'information vidéo et/ou audio passe dans une carte ou un module (type carte contrôle d'accès) pouvant être rajouté à l'appareil. Cette carte ou ce module sont typiquement destinés à décrypter le flux audio et/ou vidéo dans le cas de programmes de télévision payants ou à droits restreints.

## Revendications

1. Magnétoscope numérique comportant:
- un moyen (EM1) pour recevoir un signal RF d'origine,
- un moyen (8, 9, UC) pour extraire de ce signal RF d'origine, des données numériques compressées représentant des images fixes et/ou de la vidéo et/ou de l'audio,
- un moyen (UC) pour stocker les données numériques compressées sur un dispositif de stockage (S),
- un moyen (UC) pour lire, à partir du dispositif de stockage (S), les données numériques stockées,
**se caractérisant par le fait qu'**il comporte en outre :
- un moyen (3) pour moduler, suivant un standard de modulation numérique, les données numériques lues,
- un moyen (4) pour remoduler le signal généré en un signal RF,
- un moyen (12) pour mixer le signal RF généré avec le signal RF d'origine.

2. Magnétoscope selon la revendication 1, comportant un moyen (UC) pour créer un nouveau programme en mélangeant les données numériques lues depuis le dispositif de stockage, avec des données créées dynamiquement et/ou avec les données reçues en direct.

3. Magnétoscope selon l'une des revendications précédentes, dans lequel le dispositif de stockage (S) est amovible.

4. Magnétoscope selon l'une des revendications 1 ou 2, dans lequel le stockage est déportée sur un dispositif de stockage (S) accessible par réseau filaire ou sans fil.

5. Magnétoscope selon l'une des revendications précédentes, dans lequel des données numériques, autres que celles contenues dans le signal RF d'origine, sont stockées sur le dispositif de stockage (S) par un autre appareil.

6. Procédé pour transmettre un signal numérique à un téléviseur ayant une entrée compatible avec la télévision numérique, **se caractérisant par le fait qu'**il comporte les étapes suivantes :
- réception d'un signal RF d'origine,
- extraction du signal RF d'origine, des données numériques compressées représentant des images fixes et/ou de la vidéo et/ou de l'audio,
- stockage des données numériques compressées sur un dispositif de stockage (S),
- lecture, à partir du dispositif de stockage (S), des données numériques stockées, **caractérisé par** :
- modulation, suivant un standard de modulation numérique, des données numériques lues,
- remodulation du signal généré en un signal RF,
- mixage du signal RF généré avec le signal RF d'origine.

7. Procédé selon la revendication 6, dans lequel on crée un nouveau programme en mélangeant les données numériques relues depuis le dispositif de stockage (S), avec des données créées dynamiquement et/ou avec les données reçues en direct.

## Patentansprüche

1. Digitales Aufnahmegerät, umfassend:
- ein Mittel (EM1), um ein HF-Ausgangssignal zu empfangen,
- ein Mittel (8, 9, UC), um aus diesem HF-Ausgangssignal komprimierte digitale Daten zu entnehmen, die feste Bilder und/oder ein Video und/oder eine Audioübertragung darstellen,
- ein Mittel (UC), um die komprimierten digitalen Daten in einer Speichereinrichtung (S) zu speichern,
- ein Mittel (UC), um in der Speichereinrichtung (S) die gespeicherten digitalen Daten zu lesen,
**dadurch gekennzeichnet, dass** es ferner Folgendes umfasst:
- ein Mittel (3), um nach einem digitalen Modulationsstandard die gelesenen digitalen Daten zu modulieren,
- ein Mittel (4), um das erzeugte Signal in ein HF-Signal zu remodulieren,
- ein Mittel (12), um das erzeugte HF-Signal mit dem HF-Ausgangssignal zu mischen.

2. Aufnahmegerät nach Anspruch 1, umfassend ein Mittel (UC), um ein neues Programm zu erstellen, wobei die in der Speichereinrichtung gelesenen digitalen Daten mit den dynamisch erzeugten Daten und/oder mit den direkt erhaltenen Daten gemischt werden.

3. Aufnahmegerät nach einem der vorhergehenden Ansprüche, bei dem die Speichereinrichtung (S) abnehmbar ist.

4. Aufnahmegerät nach einem der Ansprüche 1 oder 2, bei dem die Speicherung auf eine über ein verdrahtetes oder drahtloses Netz zugängliche Speichereinrichtung (S) übertragen wird.

5. Aufnahmegerät nach einem der vorhergehenden Ansprüche, bei dem digitale Daten, die sich von jenen in dem HF-Ausgangssignal enthaltenen unterscheiden, in der Speichereinrichtung (S) durch ein anderes Gerät gespeichert werden.

6. Verfahren zur Übertragung eines digitalen Signals an ein Fernsehgerät, das einen kompatiblen Anschluss für Digitalfernsehgeräte aufweist, **dadurch gekennzeichnet, dass** es die folgenden Schritte umfasst:
- Empfang eines HF-Ausgangssignals,
- aus dem HF-Ausgangssignal Entnahme von komprimierten digitalen Daten, die feste Bilder und/oder ein Video und/oder eine Audioübertragung darstellen,
- Speicherung der komprimierten digitalen Daten in einer Speichereinrichtung (S),
- Lesen der gespeicherten digitalen Daten in der Speichereinrichtung (S),
**gekennzeichnet durch**:
- eine Modulation der gelesenen digitalen Daten nach einem digitalen Modulationsstandard,
- eine Remodulation des erzeugten Signals in ein HF-Signal,
- ein Mischen des erzeugten HF-Signals mit dem HF-Ausgangssignal.

7. Verfahren nach Anspruch 6, bei dem ein neues Programm erstellt wird, wobei die in der Speichereinrichtung (S) neu gelesenen digitalen Daten mit dynamisch erzeugten Daten und/oder mit den direkt erhaltenen Daten gemischt werden.

## Claims

1. Digital video recorder comprising:
- a means (EM1) for receiving an original RF signal,
- a means (8, 9, UC) for extracting from this original RF signal, compressed digital data representing fixed images and/or video and/or audio,
- a means (UC) for storing the compressed digital data on a storage device (S),
- a means (UC) for reading, from the storage device (S), the stored digital data,
**characterized in that** it also comprises:
- a means (3) for modulating, according to a digital modulation standard, the digital data read,
- a means (4) for remodulating the generated signal into an RF signal,
- a means (12) for mixing the generated RF signal with the original RF signal.

2. Video recorder according to Claim 1, comprising a means (UC) for creating a new programme by mixing the digital data read from the storage device, with data created dynamically and/or with the data received directly.

3. Video recorder according to one of the preceding claims, in which the storage device (S) is removable.

4. Video recorder according to one of Claims 1 or 2, in which the storage is transferred to a storage device (S) accessible via a wired or wireless network.

5. Video recorder according to one of the preceding claims, in which digital data, other than those contained in the original RF signal, are stored on the storage device (S) by another appliance.

6. Method for transmitting a digital signal to a television having an input compatible with the digital television, **characterized in that** it comprises the following steps:
- reception of an original RF signal,
- extraction, from the original RF signal, of the compressed digital data representing fixed images and/or video and/or audio,
- storage of the compressed digital data on a storage device (S),
- reading, from the storage device (S), of the stored digital data, **characterized by**:
- modulation, according to a digital modulation standard, of the digital data read,
- remodulation of the generated signal into an RF signal,
- mixing of the generated RF signal with the original RF signal.

7. Method according to Claim 6, in which a new programme is created by mixing the digital data read from the storage device (S) with data created dynamically and/or with the data received directly.
